# EUROPEAN PATENT APPLICATION

(11) **EP 4 036 643 A1**
(43) Date of publication of application: **03.08.2022**
(21) Application number: 22152517.3
(22) Date of filing: 20.01.2022
(51) Int. Cl.: G03B 21/00, G03B 21/14, G03B 21/20, G03B 21/28

(54) **PROJECTION DEVICE**

(30) Priority: 02.02.2021 CN 202120290904 U
(71) Applicant: Coretronic Corporation, Hsin-Chu 300 (TW)
(72) Inventor: LIN, SHI-HAO, 300 Hsin-Chu (TW); CHANG, HSIN-YUEH, 300 Hsin-Chu (TW)
(74) Representative: Ter Meer Steinmeister & Partner

(57) **Abstract**

A projection device, including an illumination system, a light valve and a projection lens, is provided. The illumination system is used to provide an illumination beam. The light valve is disposed on a transmission path of the illumination beam and is configured to convert the illumination beam to an image beam. The light valve has a long side and a short side, and the short side of the light valve is parallel to a first direction. The illumination beam is incident on an effective display region of the light valve from the short side of the light valve. The projection lens is disposed on a transmission path of the image beam and is configured to project the image beam out of the projection device to form a vertical image frame. A short side of the vertical image frame is parallel to the first direction.

## Description

This application claims the priority benefit of China application serial no. 202120290904.8, filed on Feb. 2, 2021.

### BACKGROUND

### Technical Field

This disclosure relates to an optical device, and in particular to a projection device.

### Description of Related Art

In general, an image frame projected by a projector is a horizontal image frame with horizontal width greater than vertical height. However, in some applications (for example, elevator door projection), a vertical image frame with vertical height greater than horizontal width may also be required. A current method is to set a portion of the effective display region of the digital micro-mirror device (DMD) corresponding to a predetermined projection region to an on-state, and other portions of the effective display region corresponding to the non-predetermined projection region to an off-state. For example, the projector may project a horizontal image frame when the whole effective display region of the digital micro-mirror device is set to the on-state, and when the projector is applied to the elevator door projection, the portion of the effective display region corresponding to the region of the elevator doors may be set to the on-state, while the other portions of the effective display region corresponding to regions next to the both sides of the elevator doors are set to the off-state. Therefore, the projector can only project the image on the region of the elevator doors, and not the regions next to the both sides of the elevator doors.

However, in the above method, the portions of the effective display region corresponding to the regions next to the both sides of the elevator doors may account for a relatively high proportion of the effective display region. And, in general, the whole effective display region of the digital micro-mirror device is irradiated by the incident ray. Therefore, the utilization rate of the effective display region is greatly reduced when the portion of the effective display region corresponding to the non-predetermined projection region is set to the off-state, which will cause a loss in brightness and resolution.

The information disclosed in this background section is only for enhancement of understanding of the background of the described technology and therefore it may contain information that does not form the prior art that is already known to a person of ordinary skill in the art. Furthermore, the information disclosed in this section does not mean that one or more problems to be resolved by one or more embodiments of the disclosure were acknowledged by a person of ordinary skill in the art.

### SUMMARY

It is an object of the present invention to provide a projection device which can provide a vertical image frame with good display quality.

Other objectives and advantages of the disclosure may be further understood from the technical features disclosed in the disclosure.

The object is solved by the features of the independent claims. Preferred embodiments are given in the dependent claims.

A projection device is provided according to an embodiment of the disclosure. The projection device includes an illumination system, a light valve and a projection lens. The illumination system is used for providing an illumination beam. The light valve is disposed on a transmission path of the illumination beam and is configured to convert the illumination beam to an image beam. The light valve has a long side and a short side, and the short side of the light valve is parallel to a first direction. The illumination beam is incident on an effective display region of the light valve from the short side of the light valve. The projection lens is disposed on a transmission path of the image beam and is configured to project the image beam out of the projection device to form a vertical image frame. The short side of the vertical image frame is parallel to the first direction.

The projection device as described above may be further combined with one or more of the following optional features.

In one or more embodiments, an optical axis of the projection lens may be located on a reference plane.

The first direction may be parallel to the reference plane.

The reference plane and the vertical image frame may be orthogonal to each other.

In one or more embodiments, the optical axis of the projection lens may be parallel to a second direction, and the long side of the light valve may be parallel to the second direction.

In one or more embodiments, the optical axis of the projection lens may be parallel to a second direction, the long side of the light valve may be parallel to a third direction, and the three direction and the reference plane may be orthogonal to each other.

In one or more embodiments, the illumination beam may leave the illumination system in the first direction.

In one or more embodiments, a long side of the effective display region of the light valve may have a first length.

There may be a first shift amount between a center of the light valve and the reference plane.

A long side of the vertical image frame may have a second length.

There may be a second shift amount between a center of the vertical image frame and the reference plane.

A ratio of the first shift amount to the first length may be substantially equal to a ratio of the second shift amount to the second length.

In one or more embodiments, the projection device may further comprise a housing, configured to accommodate the illumination system, the light valve, and the projection lens.

In one or more embodiments, the housing may have a first surface, the first surface may be parallel to the vertical image frame, and a long side of the first surface ,may be parallel to the short side of the vertical image frame.

In one or more embodiments, the projection device may further comprise an optical path diversion element, configured to reflect the image beam coming from the projection lens to an image plane, so as to form the vertical image frame on the image plane.

In one or more embodiments, the projection device may further comprise a housing with a transparent cover plate.

The transparent cover plate may be disposed on the optical path diversion element and located on a transmission path of the image beam projected by the projection lens.

In one or more embodiments, a line connecting a center of the vertical image frame to any point on the optical path diversion element, a central axis of the projection lens, and an extension line of the center of the vertical image frame in a direction of a long side of the vertical image frame may be connected to form a triangle.

In one or more embodiments, a proportion of the vertical image frame to an effective projection region corresponding to the effective display region of the light valve may be greater than or equal to 30%

In one or more embodiments, a proportion of the vertical image frame to an effective projection region corresponding to the effective display region of the light valve may be greater than or equal to 95%.

In one or more embodiments, an aspect ratio of the vertical image frame may be same as an aspect ratio of the effective display region of the light valve.

In one or more embodiments, a difference between an aspect ratio of the vertical image frame and an aspect ratio of the effective display region of the light valve may be greater than 0%, and less than or equal to 10%.

In one or more embodiments, the projection device may further comprise a housing, configured to accommodate the illumination system, the light valve, and the projection lens.

The housing may have a first surface, the first surface is parallel to the vertical image frame, and a long side of the first surface is parallel to a long side of the vertical image frame.

Based on the above, the embodiments of the disclosure have at least one of the following advantages. In the embodiment of the disclosure, the optical path of the image beam passing through the light valve shifts in the vertical direction relative to the reference plane including the optical axis of the projection lens. Therefore, the image beam projected out of the projection device may directly form the vertical display frame. In this way, when used in the applications that require a vertical image frame, the projection device according to the embodiment of the disclosure does not sacrifice the brightness and resolution, and therefore, can provide a vertical image frame with good display quality.

Other objectives, features and advantages of the disclosure can be further understood from the further technological features disclosed by the embodiments of the disclosure wherein there are shown and described preferred embodiments of the disclosure, simply by way of illustration of modes best suited to carry out the disclosure.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the descriptions, serve to explain the principles of the disclosure.
FIG. 1 is a block view of a projection device according to an embodiment of the disclosure.
FIG. 2 is a perspective view of the projection device in FIG. 1.
FIG. 3A is a schematic view of an internal structure of the projection device in FIG. 2.
FIG. 3B is a schematic view of an optical path when an illumination beam enters a light valve in FIG. 3A.
FIGs. 3C and 3D are schematic views of an incident direction of the illumination beam in relation to a flipping direction of a mirror of an effective display region of the light valve.
FIGs. 3E and 3F are schematic views of another incident direction of the illumination beam in relation to the flipping direction of the mirror of the effective display region of the light valve.
FIG. 4 is a side perspective view of the projection device in FIG. 2.
FIG. 5 is an enlarged view of the projection device in FIG. 4.
FIG. 6A is a schematic view of a disposition structure of another light valve of the projection device in FIG. 1.
FIG. 6B is a side perspective enlarged view of the projection device in FIG. 6A.
FIG. 7A is a perspective view of another projection device in FIG. 1.
FIG. 7B is a schematic view of an internal structure of the projection device in FIG. 7A.
FIG. 7C is a side perspective enlarged view of the projection device in FIG. 7A.

### DESCRIPTION OF THE EMBODIMENTS

In the following detailed description of the preferred embodiments, reference is made to the accompanying drawings which form a part hereof, and in which are shown by way of illustration specific embodiments in which the disclosure may be practiced. In this regard, directional terminology, such as "top", "bottom", "front", "back" etc., is used with reference to the orientation of the figure(s) being described. The components of the disclosure can be positioned in a number of different orientations. As such, the directional terminology is used for purposes of illustration and is in no way limiting.

On the other hand, the drawings are only schematic and the size of the components may be exaggerated for clarity. It is to be understood that other embodiments may be utilized and structural changes may be made without departing from the scope of the disclosure. Also, it is to be understood that the phraseology and terminology used herein are for the purpose of description and should not be regarded as limiting.

The use of "including", "comprising", or "having" and variations thereof herein is meant to encompass the items listed thereafter and equivalents thereof as well as additional items. Unless limited otherwise, the terms "connected", "coupled", and "mounted" and variations thereof herein are used broadly and encompass direct and indirect connections, couplings, and mountings.

Similarly, the terms "facing", "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

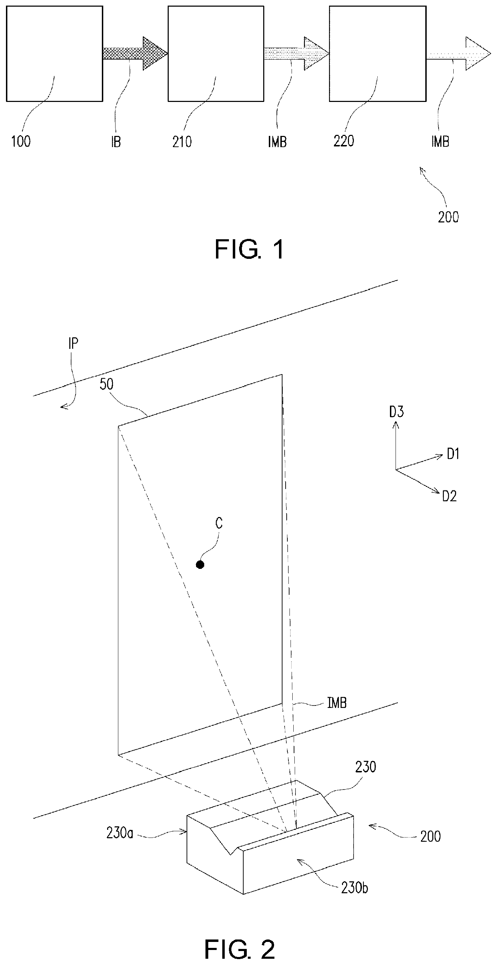

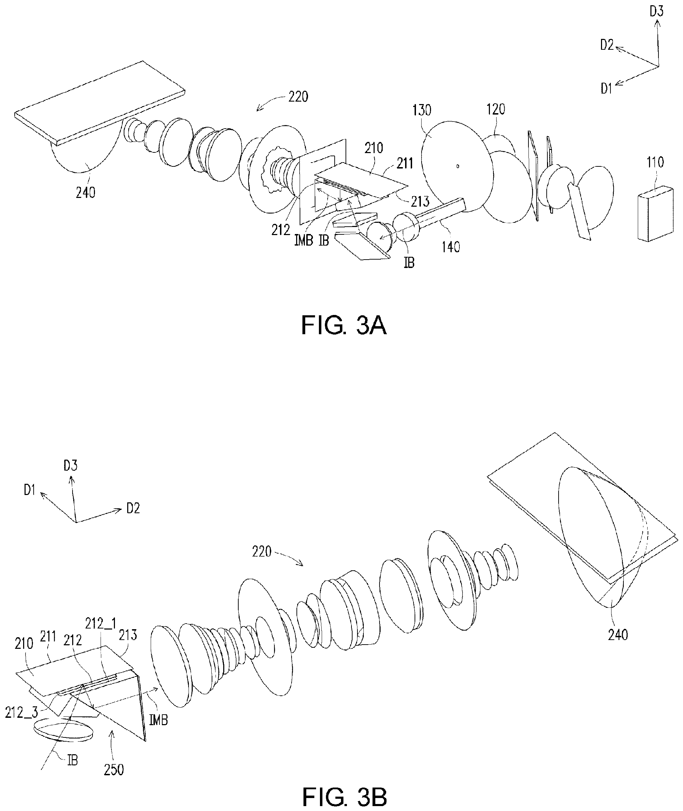

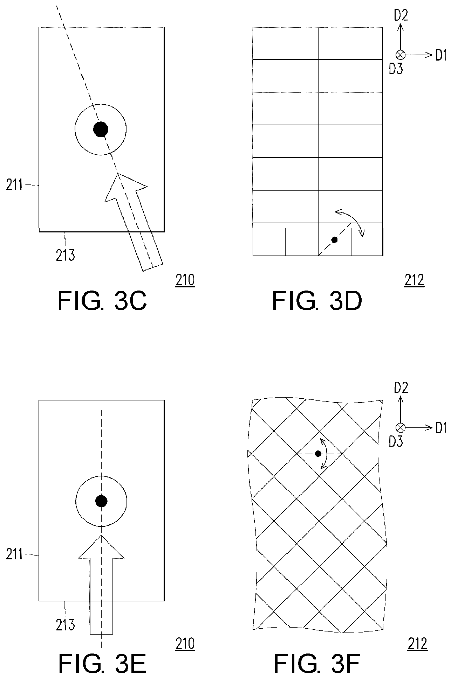

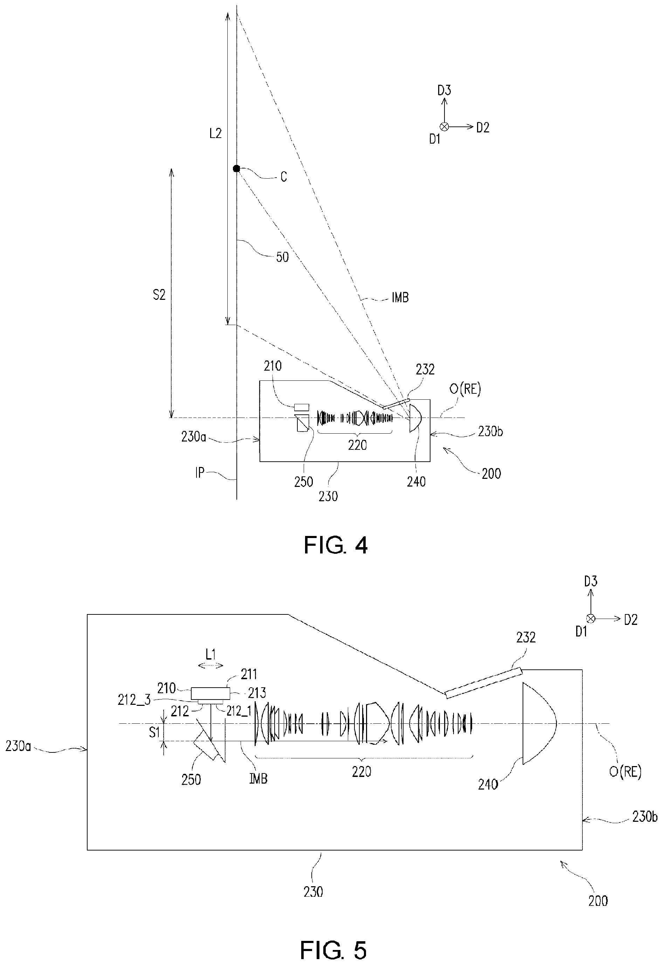

FIG. 1 is a block view of a projection device according to an embodiment of the disclosure. FIG. 2 is a perspective view of the projection device in FIG. 1. FIG. 3A is a schematic view of an internal structure of the projection device in FIG. 2. FIG. 3B is a schematic view of an optical path when an illumination beam enters a light valve in FIG. 3A. FIGs. 3C and 3D are schematic views of an incident direction of the illumination beam in relation to a flipping direction of a mirror of an effective display region of the light valve. FIGs. 3E and 3F are schematic views of another incident direction of the illumination beam in relation to the flipping direction of the mirror of the effective display region of the light valve. FIG. 4 is a side perspective view of the projection device in FIG. 2. FIG. 5 is an enlarged view of the projection device in FIG. 4. Some components are omitted in FIGs. 4 and 5 for clarity during description.

With reference to FIG. 1, a projection device 200 according to the embodiment includes an illumination system 100, a light valve 210, and a projection lens 220. The illumination system 100 is used to provide an illumination beam IB. The light valve 210 is disposed on a transmission path of the illumination beam IB and is configured to convert the illumination beam IB to an image beam IMB. The projection lens 220 is disposed on a transmission path of the image beam IMB and is configured to project the image beam IMB onto an image plane IP (denoted in FIG. 2, which is, for example, a screen or a wall) to form an image frame. The light valve 210 transforms the illumination beam IB of different colors into the image beam 1MB according to a time sequence and transmits the image beam IMB to the projection lens 220 after the illumination beam IB of different colors is irradiated on the light valve 210. Therefore, the image beam IMB is projected out of the projection device 200 and the image frame formed on the image plane IP may become a colored frame.

In the embodiment, the light valve 210 is, for example, a digital micro-mirror device (DMD). In the embodiment, the projection lens 220 includes, for example, a combination of one or more optical lenses with refractive power (as shown in FIG. 4). The optical lenses include non-planar lenses such as a double-concave lens, a double-convex lens, a meniscus lens, a convex-concave lens, a plano-convex lens, a plano-concave lens, or various combinations thereof. The disclosure does not limit the form and type of the projection lens 220.

With reference to FIGs. 2 and 3, in the embodiment, the image plane IP is, for example, a screen or a wall, and the projection device 200 is, for example, mounted on the ground or on a desktop. The image beam 1MB is projected upwards to the image plane IP. However, in other embodiments, the projection device 200 may also be mounted at a higher position such as a ceiling. The image beam 1MB is then projected downwards to the image plane IP. FIG. 2 and subsequent accompanying drawings of this disclosure deliberately draw the coordinate axes for ease of description. The image plane IP (that is, the screen or the wall) is a plane parallel to a first direction D1 and a third direction D3, while the ground, the desktop or the ceiling is a plane parallel to the first direction D1 and a second direction D2. Therefore, the second direction D2 and the first direction D1 are horizontal directions, and the third direction D3 may be regarded as a vertical direction.

As shown in FIG. 2, the projection lens 220 projects the image beam 1MB out of the projection device 200 to form a vertical image frame 50. The vertical image frame 50 refers to an image frame with vertical height greater than horizontal width, and its formation method will be described in detail as follows.

Specifically, as shown in FIGs. 3A and 3B, in the embodiment, the illumination system 100 includes, for example, a light source 110, a wavelength conversion element 120, a filter element 130, and a light homogenizing element 140. The light source 110 is configured to emit a beam, the wavelength conversion element 120 may be configured to convert the beam emitted by the light source into different colored lights, and the filter element 130 may be used to improve color purity of the colored light, so as to form the illumination beam IB. In addition, the light homogenizing element 140 is used to homogenize the illumination beam IB and enable the illumination beam IB to be transmitted to the light valve 210. In this case, the light homogenizing element 140 is disposed in the first direction D1, and a direction of the illumination beam IB when leaving the illumination system 100 is a traveling direction of the illumination beam IB when emerging from the light homogenizing element 140. In other words, in the embodiment, the illumination beam IB leaves the illumination system 100 in the first direction D1. However, in other embodiments, the illumination system 100 may also include multiple different light sources, so as to respectively emit illumination beams IB of different colors. The disclosure does not limit the form and type of the illumination system 100.

On the other hand, as shown in FIGs. 3A and 3B, the light valve 210 has a long side 211 and a short side 213, and the short side 213 of the light valve 210 is parallel to the first direction D1. Furthermore, as shown in FIGs. 3A, 3B and 1, in the embodiment, the light valve 210 is, for example, a DMD and is composed of multiple micro mirrors. The light valve 210 controls an emergent direction of the illumination beam IB through control of flipping of each of the mirrors. Therefore, the incident direction of the illumination beam IB incident on the light valve 210 have to correspond to a flipping direction and angle of the mirror of the light valve 210. Otherwise, the illumination beam IB would not be able to smoothly transform to the image beam 1MB through the light valve 210 and output to the projection lens 220. The illumination beam IB is incident on an effective display region 212 of the light valve 210 from the short side 213 of the light valve 210. In addition, the effective display region 212 of the light valve 210 refers to an actual optical operating region where the illumination beam IB may be converted to the image beam 1MB and transmitted to the projection lens 220. For example, the effective display region 212 is a region composed of the multiple micro mirrors on the DMD when the light valve 210 is, for example, a DMD

In general, the flipping of each of the mirrors of the effective display region 212 of the light valve 210 may be divided into three states, namely an on-state (the mirror is flipped at this time, and the image beam 1MB enters the projection lens 220), an off-state (the mirror is flipped, the image beam IMB does not enter the projection lens 220), and a flat state (the mirror is not flipped). In addition, since the mirror of the light valve 210 is flipped along its rotational diagonal, as shown in FIGs. 3C and 3D, the mirrors on the effective display region 212 are arranged along the short side 213 and the long side of the light valve 210. That is, a side of each of the mirrors is parallel to the short side 213 or the long side 211 of the light valve 210. The illumination beam IB may be incident from obliquely below a direction of the short side 213 of the light valve 210, and emerge through a direction of the paper (that is, in an opposite direction of the third direction D3). That is, orthographic projection of the illumination beam IB on the light valve 210 overlaps the short side 213 of the light valve 210, and is not perpendicular to the short side 213 when the illumination beam IB is incident on the light valve 210. Or, as shown in FIGs. 3E and 3F, the rotational diagonal of the mirrors on the effective display region 212 are arranged along the short side 213 of the light valve 210. That is, the rotational diagonal of each of the mirrors is parallel to the short side 213 of light valve 210. Therefore, the illumination beam IB may be incident from directly below the direction of the short side 213 of the light valve 210, but may still emerge through the direction of the paper (that is, in the opposite direction of the third direction D3). That is, the orthographic projection of the illumination beam IB on the light valve 210 overlaps the short side 213 of the light valve 210, and is substantially perpendicular to the short side 213 when the illumination beam IB is incident on the light valve 210.

On the other hand, as shown in FIG. 4, an optical axis O of the projection lens 220 is located on a reference plane RE, where the reference plane RE is parallel to the first direction D1 and the second direction D2, and the optical axis O of the projection lens 220 is parallel to the second direction D2. In addition, as shown in FIGs. 3A and 3B, the effective display region 212 of the light valve 210 is rectangular. A direction of the long side 211 of the light valve 210 refers to a direction parallel to a long side 212_1 of the effective display region 212, which is parallel to the second direction D2. Similarly, the direction of the short side 213 of the light valve 210 refers to a direction parallel to a short side 212_3 of the effective display region 212, which is parallel to the first direction D1. In other words, the reference plane RE is parallel to the direction of the long side 211 of the light valve 210 (that is, the second direction D2), and is parallel to the direction of the short side 213 of the light valve 210 (that is, the first direction D1). In addition, in the embodiment, the optical axis O of the projection lens 220 is parallel to the direction of the long side 211 of the light valve 210 (for example, the second direction D2 in the figure) and perpendicular to the direction of the short side 213 of the light valve 210 (for example, the first direction D1 in the figure).

Next, as shown in FIG. 4, in the embodiment, a direction of a long side of the vertical image frame 50 refers to a direction parallel to the long side of the vertical image frame 50 (for example, the third direction D3 in the figure). Similarly, a direction of a short side of the vertical image 50 refers to a direction parallel to the short side of the vertical image frame 50 (for example, the first direction D1 in the figure). That is, the short side of the vertical image frame 50 is parallel to the first direction D1, and the reference plane RE and the vertical image frame 50 are orthogonal to each other.

Specifically, the projection device 200 further includes an optical lens group 250. The optical lens group 250 is disposed on the transmission path of the illumination beam IB coming from the illumination system 100, so as to guide the illumination beam IB to the light valve 210, and guide the image beam 1MB emitted from the light valve 210 to the projection lens 220. As shown in FIGs. 4 and 5, the illumination beam IB is incident on the light valve 210 via the optical lens group 250 and transformed into the image beam IMB. An optical path of the image beam 1MB reflecting via the optical lens group 250 shifts in the third direction D3 relative to the reference plane RE including the optical axis O of the projection lens 220, and has a first shift amount S1. Next, as shown in FIG. 4, in the direction of the long side of the vertical image frame 50 (for example, the third direction D3 in the figure), a center C of the vertical image frame 50 has a second shift amount S2 relative to the reference plane RE.

Furthermore, in the embodiment, the reference plane RE is located between the effective display region 212 of the light valve 210 and the vertical image frame 50. The long side 212_1 of the effective display region 212 of the light valve 210 has a first length L1. The long side of the vertical image frame 50 has a second length L2. A ratio of the first shift amount S1 to the first length L1 is substantially equal to a ratio of the second shift amount S2 to the second length L2. Therefore, the image beam 1MB projected from the projection device 200 may directly form the vertical display frame 50. In this way, when used in applications requiring a vertical image frame (such as elevator doors projection), the projection device 200 according to the embodiment of the disclosure does not have to sacrifice brightness and resolution, and therefore, may provide the vertical image frame 50 with good display quality.

It should be noted that the image projected by the projection device 200 is vertical, therefore even if the vertical image frame 50 has to be limited to a predetermined vertical projection region (for example, a region of the elevator doors), utilization rate of the display region 212 of the light valve 210 is still relatively high. In other words, only a small portion of the effective display region 212 may be set to the off-state. In some embodiments, a proportion of the vertical image frame 50 to an effective projection region corresponding to the effective display region 212 of the light valve 210 may be at least, for example, greater than or equal to 30%. In some embodiments, the proportion of the vertical image frame 50 to the effective projection region corresponding to the effective display region 212 of the light valve 210 may be at least, for example, greater than or equal to 95%. In this case, the effective projection region corresponding to the effective display region 212 of the light valve 210 refers to a region where the image beam IMB may form an image on the image plane IP when the effective display regions 212 of the light valve 210 are all set to the on-state.

In some embodiments, a difference between an aspect ratio of the vertical image frame 50 and an aspect ratio of the effective display region 212 of the light valve 210 is, for example, greater than 0%, and less than or equal to 10%. Alternatively, in some embodiments, the aspect ratios of the vertical image frame 50 and the effective display region 212 of the light valve 210 are substantially the same. That is to say, in some embodiments, the effective display region 212 of the light valve 210 may all be set to the on-state, and may not have to set a portion of the effective display region 212 to the off-state.

It should be noted that in other embodiments, the direction of the short side 213 of the light valve 210 may also be parallel to the first direction D1 in the figure, and the direction of the long side 211 of the light valve 210 in this case is parallel to the third direction D3 in the figure. Disposition direction of the reference plane RE, the optical axis O of the projection lens 220, and the vertical image frame 50 remain unchanged.

In addition, the projection device 200 further includes a housing 230, which is configured to accommodate the illumination system 100 (omitted in the figure), the light valve 210, and the projection lens 220. The housing 230 has a surface 230a and/or a surface 230b parallel to the vertical image frame 50. The surface 230a of the housing 230 faces the vertical image frame 50, and the surface 230b of the housing 230 faces away from the vertical image frame 50, and the surface 230b and the surface 230a are located on opposite sides of the housing 230. Furthermore, as shown in FIG. 2, a direction of a long side of the surface 230a and/or the surface 230b is parallel to the short side of the vertical image frame 50. In the embodiment, the surface 230a and/or the surface 230b of the housing 230 is, for example, rectangular, and horizontal width of the surface 230a and/or the surface 230b is greater than its vertical height. The direction of the long side of the surface 230a and/or the surface 230b refers to a direction (for example, the first direction D1 in the figure) parallel to the long side of the surface 230a and/or the surface 230b. Similarly, a direction of a short side of the surface 230a and/or the surface 230b refers to a direction (for example, the third direction D3 in the figure) parallel to the short side of the surface 230a and/or the surface 230b. However, in other embodiments, the horizontal width of the surface 230a and/or the surface 230b of the housing 230 may also be, for example, less than or equal to its vertical height, and the disclosure is not limited thereto.

On the other hand, as shown in FIGS. 3 to 5, the projection device 200 further includes an optical path diversion element 240. The optical path diversion element 240 is disposed in the housing 230 and is configured to reflect the image beam IMB coming from the projection lens 220 to the image plane IP, so as to form the vertical image frame 50. For example, the optical path diversion element 240 is a concave mirror. As shown in FIG. 3, a line connecting the center C of the vertical image frame 50 to any point on the optical path diversion element 240, the optical axis O of the projection lens 220, and an extension line of the center C of the vertical image frame 50 in the direction (for example, the third direction D3 in the figure) of the long side of the vertical image frame 50 connect to form a triangle. In this case, the extension line of the center C of the vertical image frame 50 in the direction (for example, the third direction D3 in the figure) of the long side of the vertical image frame 50 is, for example, a line connecting the center C of the vertical image frame 50 and the optical axis O of the projection lens 220 in the direction (for example, the third direction D3 in the figure) of the long side of vertical image frame 50.

In addition, as shown in FIGs. 3 and 4, the housing 230 of the projection device 200 may include a transparent cover plate 232. The transparent cover plate 232 is disposed on a transmission path of the image beam 1MB coming from the optical path diversion element 240. Then, the image beam IMB passes through the transparent cover plate 232 and is projected out of the projection device 200 to form the vertical image frame 50 on the image plane IP after the image beam 1MB coming from the projection lens 220 has its optical path being diverted by the optical path diversion element 240. The transparent cover plate 232 may prevent dust from adhering to the optical path diversion element 240, so as to prevent affecting optical efficiency of the projection device 200.

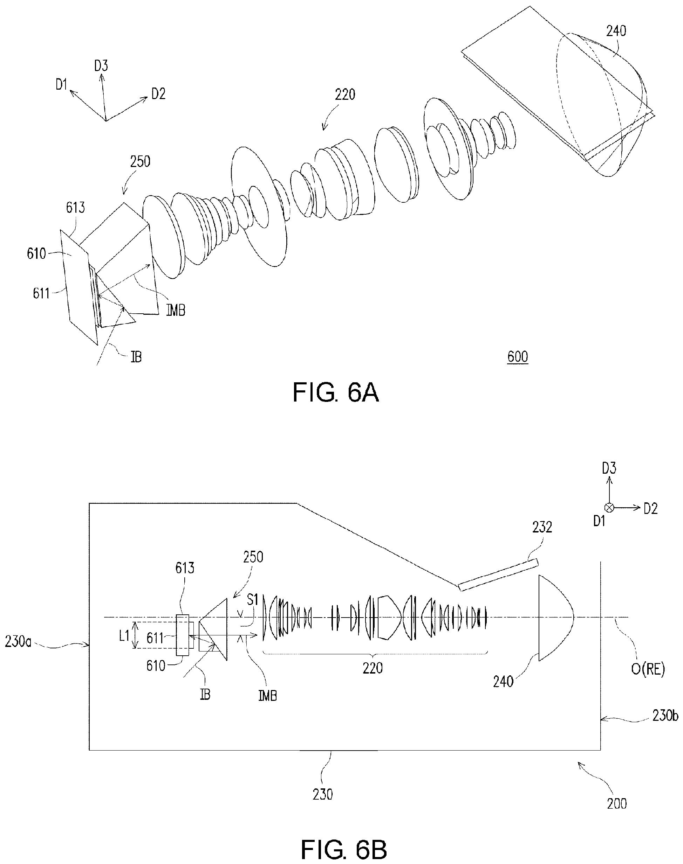

FIG. 6A is a schematic view of a disposition structure of another light valve of the projection device in FIG. 1. FIG. 6B is a side perspective enlarged view of the projection device in FIG. 6A. With reference to FIGs. 6A and 6B, a projection device 600 in FIGs. 6A and 6B is similar to the projection device 200 in FIGs. 2 to 3B, except for the following difference. As shown in FIGs. 6A and 6B, in the embodiment, a short side 613 of a light valve 610 is parallel to the first direction D1, and a long side 611 of the light valve 610 is parallel to the third direction D3, while the disposition directions of the reference plane RE, the optical axis O of the projection lens 220, and the vertical image frame 50 are still similar to the configuration of the projection device 200 in FIG. 3A, which will not be repeated here. In this way, as shown in FIG. 6B, the optical path of the image beam 1MB passing through the light valve 610 and reflected via the optical lens group 250 shifts in the third direction D3 relative to the reference plane RE including the optical axis O of the projection lens 220, thereby enabling the image beam 1MB projected out of the projection device 600 to directly form the vertical display frame 50. In this way, when used in the applications that require a vertical image frame (such as the elevator doors projection), the projection device 600 according to the embodiment of the disclosure does not have to sacrifice the brightness and resolution, and therefore, can provide the vertical image frame 50 with good display quality. Thus, the projection device 600 can also achieve similar advantages as the foregoing projection device 200, which will not be repeated here.

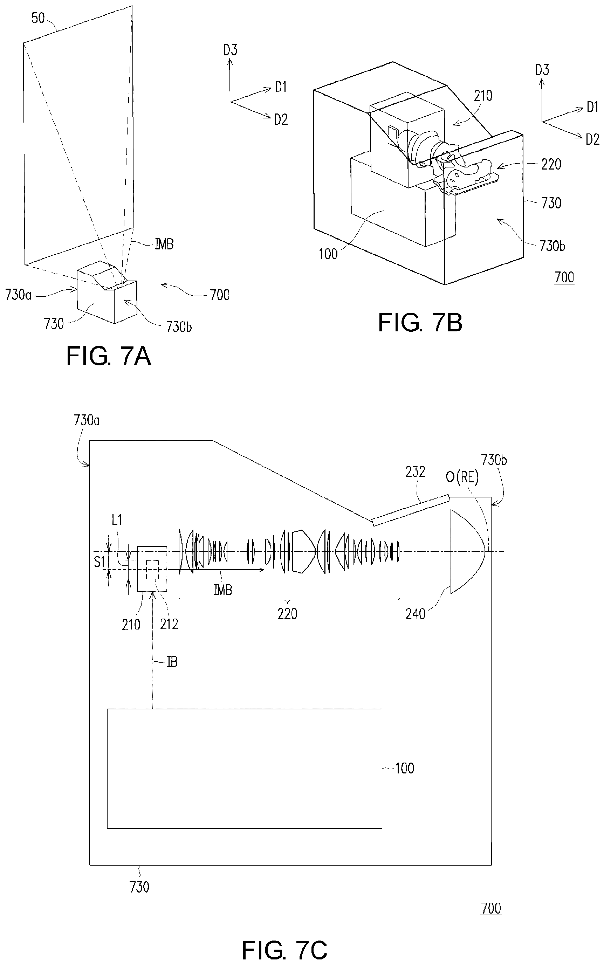

FIG. 7A is a perspective view of another projection device in FIG. 1. FIG. 7B is a schematic view of an internal structure of the projection device in FIG. 7A. FIG. 7C is a side perspective enlarged view of the projection device in FIG. 7A. With reference to FIGs. 7A to 7C, a projection device 700 in FIGs. 7A to 7C is similar to the projection device 200 in FIGs. 2 to 3B, except for the following difference. As shown in FIGs. 7A to 7C, in the embodiment, a long side of a surface 730a and/or a surface 730b of a housing 730 of the projection device 700 is parallel to the long side of the vertical image frame. Furthermore, as shown in FIGs. 7B and 7C, the illumination system 100 is disposed below the light valve 210 and the projection lens 220, so that horizontal width of the surface 730a and/or the surface 730b of the housing 730 is less than its vertical height.

In summary, the embodiments of the disclosure have at least one of the following advantages. In the embodiment of the disclosure, since the optical path of the image beam passing through the light valve shifts in the vertical direction relative to the reference plane including the optical axis of the projection lens, the image beam projected out of the projection device may directly form the vertical display frame. In this way, when used in the applications that require a vertical image frame (such as the elevator doors projection), the projection device according to the embodiment of the disclosure does not sacrifice the brightness and resolution, and therefore, can provide a vertical image frame with good display quality.

The foregoing description of the preferred embodiments of the disclosure has been presented for purposes of illustration and description. It is not intended to be exhaustive or to limit the disclosure to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the disclosure and its best mode practical application, thereby enabling persons skilled in the art to understand the disclosure for various embodiments and with various modifications as are suited to the particular use or implementation contemplated. It is intended that the scope of the disclosure be defined by the claims appended hereto and their equivalents in which all terms are meant in their broadest reasonable sense unless otherwise indicated. Therefore, the terms "the invention", "the present disclosure" or the like does not necessarily limit the claim scope to a specific embodiment, and the reference to particularly preferred exemplary embodiments of the disclosure does not imply a limitation on the disclosure, and no such limitation is to be inferred. The disclosure is limited only by the scope of the appended claims.

The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims.

Any advantages and benefits described may not apply to all embodiments of the disclosure. It should be appreciated that variations may be made in the embodiments described by persons skilled in the art without departing from the scope of the disclosure as defined by the following claims. Moreover, no element and component in the disclosure is intended to be dedicated to the public regardless of whether the element or component is explicitly recited in the following claims.

## Claims

1. A projection device, comprising:
an illumination system (100);
a light valve (210); and
a projection lens (220),
wherein the illumination system (100) is used to provide an illumination beam (IB), the light valve (210) is disposed on a transmission path of the illumination beam (IB), and is configured to convert the illumination beam (IB) to an image beam (IMB),
wherein the light valve (210) has a long side (211) and a short side (213), the short side (213) of the light valve (210) is parallel to a first direction (D1), and the illumination beam (IB) is incident on an effective display region (212) of the light valve (210) from the short side (213) of the light valve (210), and
the projection lens (220) is disposed on a transmission path of the image beam (1MB), and is configured to project the image beam (IMB) out of the projection device (100) to form an vertical image frame (50), and a short side of the vertical image frame (50) is parallel to the first direction (D1).

2. The projection device according to claim 1, wherein an optical axis of the projection lens (220) is located on a reference plane (RE), the first direction (D1) is parallel to the reference plane (RE), and the reference plane (RE) and the vertical image frame (50) are orthogonal to each other.

3. The projection device according to claim 1 or 2, wherein the optical axis of the projection lens (220) is parallel to a second direction (D2), and the long side (211) of the light valve (210) is parallel to the second direction (D2).

4. The projection device according to claim 1 or 2, wherein the optical axis of the projection lens (220) is parallel to a second direction (D2), the long side (211) of the light valve (210) is parallel to a third direction (D3), and the three directions (D1-D3) and the reference plane (RE) are orthogonal to each other.

5. The projection device according to any one of claims 1-4, wherein the illumination beam (IB) leaves the illumination system (100) in the first direction (D1).

6. The projection device according to any one of the preceding claims, wherein a long side (211) of the effective display region (212) of the light valve (210) has a first length (L1), there is a first shift amount (S1) between a center of the light valve (210) and the reference plane (RE), a long side (211) of the vertical image frame (50) has a second length (L2), there is a second shift amount (S2) between a center of the vertical image frame (50) and the reference plane (RE), and a ratio of the first shift amount (S1) to the first length (L1) is substantially equal to a ratio of the second shift amount (S2) to the second length (L2).

7. The projection device according to any one of the preceding claims, further comprising a housing (230), configured to accommodate the illumination system (100), the light valve (210), and the projection lens (220), wherein the housing (230) has a first surface (230a), the first surface (230a) is parallel to the vertical image frame (50), and a long side of the first surface (230a) is parallel to the short side of the vertical image frame (50).

8. The projection device according to any one of the preceding claims, further comprising: an optical path diversion element (240), configured to reflect the image beam (IMB) coming from the projection lens (220) to an image plane (IP), so as to form the vertical image frame (50) on the image plane (IP).

9. The projection device according to claim 8, further comprising: a housing (240) with a transparent cover plate (232), wherein the transparent cover plate (232) is disposed on the optical path diversion element (240) and located on a transmission path of the image beam (IMB) projected by the projection lens (220).

10. The projection device according to claim 8 or 9, wherein a line connecting a center of the vertical image frame (50) to any point on the optical path diversion element (240), a central axis of the projection lens (220), and an extension line of the center of the vertical image frame (50) in a direction of a long side of the vertical image frame (50) connect to form a triangle.

11. The projection device according to any one of the preceding claims, wherein a proportion of the vertical image frame (50) to an effective projection region corresponding to the effective display region (212) of the light valve (210) is greater than or equal to 30%.

12. The projection device according to any one of the preceding claims, wherein a proportion of the vertical image frame (50) to an effective projection region corresponding to the effective display region (212) of the light valve (210) is greater than or equal to 95%.

13. The projection device according to any one of the preceding claims , wherein an aspect ratio of the vertical image frame (50) is same as an aspect ratio of the effective display region (212) of the light valve (210).

14. The projection device according to any one of the preceding claims, wherein a difference between an aspect ratio of the vertical image frame (50) and an aspect ratio of the effective display region (212) of the light valve (210) is greater than 0%, and less than or equal to 10%.

15. The projection device according to any one of the preceding claims, further comprising: a housing (230), configured to accommodate the illumination system (100), the light valve (210), and the projection lens (220), wherein the housing (230) has a first surface (230a), the first surface (230a) is parallel to the vertical image frame (50), and a long side of the first surface (230a) is parallel to a long side of the vertical image frame (50).
